# EUROPÄISCHE PATENTSCHRIFT

(11) **EP 0 858 406 B1**
(45) Veröffentlichungstag und Bekanntmachung des Hinweises auf die Patenterteilung: **14.11.2001**
(21) Anmeldenummer: 97918882.8
(22) Anmeldetag: 08.08.1997
(51) Int. Cl.: B60T 8/40, H02K 5/24, F04B 17/03, F04C 11/00

(54) **PUMPENAGGREGAT FÜR EIN FAHRZEUGBREMSSYSTEM**
MOTOR PUMP FOR A VEHICLE BRAKING SYSTEM
MOTOPOMPE POUR SYSTEME DE FREINAGE DE VEHICULE

(30) Priorität: 09.08.1996 DE 19632213
(43) Veröffentlichungstag der Anmeldung: 19.08.1998
(73) Patentinhaber: ROBERT BOSCH GMBH, 70442 Stuttgart (DE)
(72) Erfinder: SIEGEL, Heinz, D-70435 Stuttgart (DE); PAHL, Arnold, D-71706 Markgröningen (DE); HUMMEL, Rolf, D-71144 Steinenbronn (DE); SCHWIND-GRELLMANN, Barbara, D-75446 Wiernsheim (DE); MÖHLE, Martin, D-71711 Steinheim (DE); MANK, Erika, D-71634 Ludwigsburg (DE)
(86) Internationale Anmeldenummer: DE9701706
(87) Internationale Veröffentlichungsnummer: WO9806610

(56) Entgegenhaltungen:
- EP-A- 0 451 366
- EP-A- 0 692 417
- EP-A- 0 699 571
- WO-A-95/09752
- DE-A- 4 133 879
- DE-A- 4 213 710
- DE-C- 3 941 401

## Beschreibung

### Stand der Technik

Die Erfindung geht aus von einem Pumpenaggregat für ein Fahrzeugbremssystem nach der Gattung des Anspruchs 1 beziehungsweise von einer Verbindung einer Karosserie mit einem Pumpenaggregat nach der Gattung des Anspruchs 9.

Bei einem bekannten Pumpenaggregat ist an einem Pumpengehäuse ein Elektromotor befestigt. Die Offenlegung der europäischen Patentanmeldung EP 0 699 571 A1 zeigt ein Pumpenaggregat, bei dem über zwei Motorbefestigungsschrauben ein Elektromotor an dem Pumpengehäuse angeflanscht und festgeschraubt ist. Damit das Pumpenaggregat innerhalb eines Fahrzeugs aufhängbar ist, befinden sich auf zwei unterschiedlichen Seiten des Pumpengehäuses sacklochartige Ausnehmungen, in die buchsenähnliche gummielastische Elemente eingesteckt sind. Die gummielastischen Elemente halten Aufhängebolzen. Schließlich ist noch auf einer dritten Seite des Pumpengehäuses eine dritte sacklochartige Bohrung vorgesehen, in die ebenfalls ein gummielastisches Element eingesteckt ist. Insoweit ist das Pumpenaggregat an drei Aufhängungspunkten in der Karosserie des Fahrzeugs elastisch nachgiebig aufgehängt und ausreichend lagegesichert.

Nachteilig bei der bekannten Ausführung ist, daß für das Aufhängen des Pumpenaggregats in der Karosserie eine Vielzahl zusätzlicher Einzelteile erforderlich ist. Von weiterem Nachteil ist, daß ein Teil dieser Einzelteile nur gesteckt ist und deshalb vor dem Einbau des Pumpenaggregats in die Karosserie abfallen kann. Zusätzlich von Nachteil ist, daß ein Teil dieser Einzelteile seitlich weit heraussteht und eine nicht besonders leicht herstellbare Kontur hat. Weiters nachteilig ist, daß beim Einbau des Pumpenaggregats in die Karosserie mit einem speziellen Werkzeug die Aufhängebolzen gegen Verdrehung gesichert werden müssen, und mit einem weiteren Werkzeug muß ein Befestigungsmittel mit einem Innengewinde auf die Aufhängebolzen aufgeschraubt werden. Dadurch ist die Montage des Pumpenaggregats in die Karosserie aufwendig und ohne spezielle Hilfsmittel kaum zu bewältigen.

### Vorteile der Erfindung

Das erfindungsgemäße Pumpenaggregat mit den kennzeichnenden Merkmalen des Anspruchs 1 bzw. die Verbindung einer Karosserie mit einem Pumpenaggregat mit den kennzeichnenden Merkmalen des Anspruchs 9 hat demgegenüber den Vorteil, dass die Anzahl der benötigten Einzelteile wesentlich reduziert ist.

Die zur Verbindung zwischen dem Pumpenaggregat und der Karosserie beitragenden Bauteile sind vorteilhafterweise einfach herstellbar.

Auch ohne zusätzliche Sicherungsmaßnahmen ist auf vorteilhafte Weise sichergestellt, daß auch vor dem Einbau des Pumpenaggregats in die Karosserie keine Teile unbeabsichtigt abfallen können.

Das Pumpenaggregat kann auf einfache Weise mit der Karosserie zusammengesteckt werden. Durch eine weitere einfache Befestigungsschraube kann auf vorteilhafte Weise die Verbindung zwischen dem Pumpenaggregat und der Karosserie verbessert werden.

Durch die in den Unteransprüchen aufgeführten Maßnahmen sind vorteilhafte Weiterbildungen und Verbesserungen des im Anspruch 1 angegebenen Pumpenaggregats bzw. der im Anspruch 9 angegebenen Verbindung möglich.

Ist das Gegenverbindungsteil an einem nachgiebigen bzw. einem elastischen Werkstoff vorgesehen, so entsteht dadurch vorteilhafterweise ein einfach herstellbares schwingungsmäßiges Abkoppeln des Pumpenaggregats von der Karosserie des Fahrzeugs.

Durch Vorsehen einer der Karosserie zugeordneten Vertiefung kann vorteilhafterweise sehr einfach das Formteil mit der Karosserie verbunden werden.

Eine vorteilhafterweise besonders einfach herstellbare Verbindung ergibt sich, wenn der Schraubenkopf eine zylinderförmige Außenfläche hat, die in eine an dem Gegenstückverbindungsteil vorgesehene zylinderförmige Innenfläche eingreift.

Die Motorbefestigungsschraube hat eine Drehmitnahme, damit während der Montage des Elektromotors an das Pumpengehäuse ein Werkzeug bzw. ein Drehmomentschlüssel die Motorbefestigungsschraube festziehen kann. Ist diese Drehmitnahme innenliegend und stirnseitig zugänglich vorgesehen, so wird durch die Drehmitnahme vorteilhafterweise die Verbindung zwischen dem Pumpenaggregat und der Karosserie nicht beeinträchtigt, und es kann trotz der Drehmitnahme das Gegenverbindungsteil formmäßig einfach gestaltet sein.

Der am Schraubenkopf vorgesehene radial vorstehende Absatz bietet den Vorteil, daß in axialer Richtung das Pumpenaggregat gegenüber der Karosserie auf einfache Weise festlegbar ist.

Sind zwei Motorbefestigungsschrauben vorgesehen, die gleich gestaltet sein können und beide zur Verbindung zwischen dem Pumpenaggregat und der Karosserie beitragen können, so bietet dies den Vorteil, daß die mechanische Belastung verteilt wird.

Ist zusätzlich eine Befestigungsschraube vorgesehen, mit der das Pumpenaggregat an der Karosserie festlegbar ist, so ist vorteilhafterweise mit einer einfachen Maßnahme sichergestellt, daß der Schraubenkopf der Motorbefestigungsschraube nicht ungewollt aus dem an der Karosserie vorgesehenen Gegenverbindungsteil herausrutschen kann.

Besonders vorteilhaft und zweckmäßig ist eine Ausführungsform, bei der der Elektromotor über zwei Motorbefestigungsschrauben am Pumpengehäuse befestigt ist und beide Motorbefestigungsschrauben zur Verbindung zwischen der Karosserie und dem Pumpenaggregat vorgesehen sind und das Pumpenaggregat daneben noch mit einer in das Pumpengehäuse eingeschraubten Befestigungsschraube gehalten wird. Dadurch ergibt sich bei einem Minimum an Aufwand eine besonders sichere Verbindung zwischen dem Pumpenaggregat und der Karosserie.

Ist das am Pumpengehäuse vorgesehene Gewinde ein Muttergewinde, so kann vorteilhafterweise eine einfache, meistens handelsübliche Befestigungsschraube verwendet werden.

Sind an dem Pumpenaggregat zwei Gewinde oder ggf. mehr als zwei Gewinde zum Festschrauben einer Befestigungsschraube vorgesehen, so bietet dies den Vorteil, daß wahlweise eines der Gewinde verwendet werden kann, um das Pumpenaggregat an die Karosserie zu montieren.

Durch das aus nachgiebigem Werkstoff bestehende Formteil zwischen der Karosserie und der Befestigungsschraube erhält man den Vorteil einer schwingungsmäßigen Entkopplung zwischen dem Pumpenaggregat und der Karosserie.

### Zeichnung

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figur 1 in symbolhafter Form ein Fahrzeugbremssystem, bei dem das Pumpenaggregat verwendet werden kann, die Figur 2 eine Schrägansicht, die Figur 3 eine Seitenansicht, die Figur 4 eine stirnseitige Ansicht und die Figuren 5 und 6 unterschiedlich gestaltete Einzelheiten des Pumpenaggregats.

### Beschreibung der Ausführungsbeispiele

Das erfindungsgemäß ausgeführte Pumpenaggregat kann für ein Fahrzeugbremssystem verwendet werden, bei dem mit Hilfe einer von einem Elektromotor angetriebenen Pumpe der Druck in dem Fahrzeugbremssystem erzeugt bzw. erhöht werden soll. Vorzugsweise ist das Pumpenaggregat vorgesehen, um unabhängig von einer Betätigung des Bremspedals dem Radbremszylinder einen hydraulischen Druck zuführen zu können. Zusätzlich zu dem Pumpenaggregat können weitere Pumpen vorgesehen sein, so daß das Pumpenaggregat auch als Vorladepumpe bezeichnet werden kann.

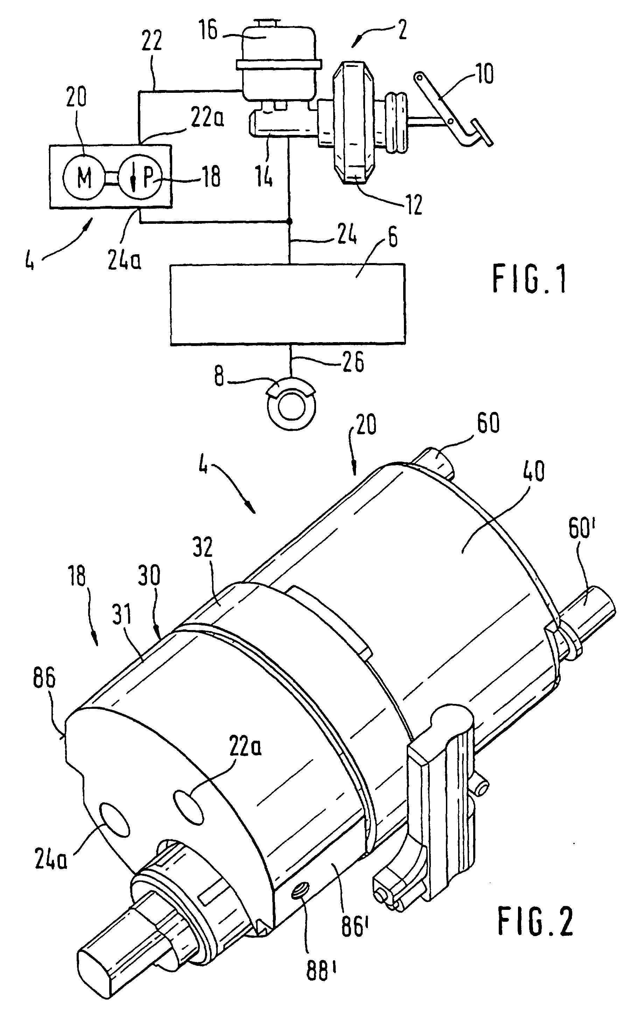

Die **Figur 1** zeigt ein beispielhaft ausgewähltes, symbolhaft dargestelltes Fahrzeugbremssystem.

In der Figur 1 dargestellt sind ein Bremsaggregat 2, ein Pumpenaggregat 4, eine Bremssteuereinrichtung 6 und eine Radbremse 8. Die Radbremse 8 hat einen der besseren Übersichtlichkeit wegen nicht dargestellten Bremszylinder. Die dargestellte Radbremse 8 steht stellvertretend für mehrere Radbremsen, die parallel an der Bremssteuereinrichtung 6 angeschlossen sein können.

Das Bremsaggregat 2 umfaßt beispielsweise einen Bremshebel 10, einen Bremskraftverstärker 12, einen Hauptbremszylinder 14 und einen Vorratsbehälter 16.

Das Pumpenaggregat 4 umfaßt eine Pumpe 18 und einen Elektromotor 20.

Das Pumpenaggregat 4 hat saugseitig einen Sauganschluß 22a, der über eine Saugleitung 22 an den Vorratsbehälter 16 angeschlossen ist. Eine Druckleitung 24 führt von einem an dem Pumpenaggregat 4 vorgesehenen Druckanschluß 24a zu der Bremssteuereinrichtung 6. Über die Druckleitung 24 ist die Bremssteuereinrichtung 6 auch an den Hauptbremszylinder 14 angeschlossen. Eine Bremsleitung 26 führt von der Bremssteuereinrichtung 6 zu der Radbremse 8. Die weiteren Radbremsen sind über weitere nicht dargestellte Bremsleitungen ebenfalls mit der Bremssteuereinrichtung 6 verbunden. Je nach Anzahl der Bremskreise können zwischen dem Hauptbremszylinder 14 und der Bremssteuereinrichtung 6 parallel neben der Druckleitung 24 weitere nicht dargestellte Druckleitungen vorgesehen sein.

Bei Betätigung des Bremshebels 10 entsteht ein hydraulischer Druck in der Druckleitung 24, der der Bremssteuereinrichtung 6 zugeführt wird. Auch ohne Betätigung des Bremshebels 10 kann mit Hilfe des Pumpenaggregats 4 in der Druckleitung 24 ein hydraulischer Druck aufgebaut werden. Der über die Druckleitung 24 der Bremssteuereinrichtung 6 zugeführte Druck kann in der Bremssteuereinrichtung 6 beeinflußt werden und wird dann entsprechend moduliert der Radbremse 8 bzw. den Radbremsen zugeführt.

Bei elektrischer Ansteuerung des Elektromotors 20 treibt der Elektromotor 20 die Pumpe 18, und die Pumpe 18 holt Druckmedium aus dem Vorratsbehälter 16, durch die Saugleitung 22, durch den Sauganschluß 22a und fördert das Druckmedium durch den Druckanschluß 24a, durch die Druckleitung 24, zu der Bremssteuereinrichtung 6. Als Druckmedium ist eine Flüssigkeit, vorzugsweise eine Bremsflüssigkeit, vorgesehen.

In der Bremssteuereinrichtung 6 gibt es beispielsweise der besseren Übersichtlichkeit wegen nicht dargestellte Druckventile, Wegeventile und/oder weitere Pumpen zum Beeinflussen des der Radbremse 8 zugeführten Bremsdrucks.

Die Figuren 2, 3, 4 und 5 zeigen mit unterschiedlichem Abbildungsmaßstab verschiedene Ansichten und Einzelheiten einer besonders vorteilhaften, bevorzugt ausgewählten beispielhaften Ausführungsform des Pumpenaggregats 4. In den Figuren 2, 3 und 4 sind der besseren Übersichtlichkeit wegen die zum Pumpenaggregat 4 führende Saugleitung 22 und die vom Pumpenaggregat 4 führende Druckleitung 24 nicht dargestellt.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren Erwähnte und Dargestellte bei allen Figuren und allen Ausführungsbeispielen. Sofern sich aus den Erläuterungen nichts anderes ergibt, sind die Einzelheiten der verschiedenen Ausführungsbeispiele miteinander kombinierbar.

Die **Figur 2** zeigt eine Ansicht des Pumpenaggregats 4 mit Blickrichtung schräg von der Seite.

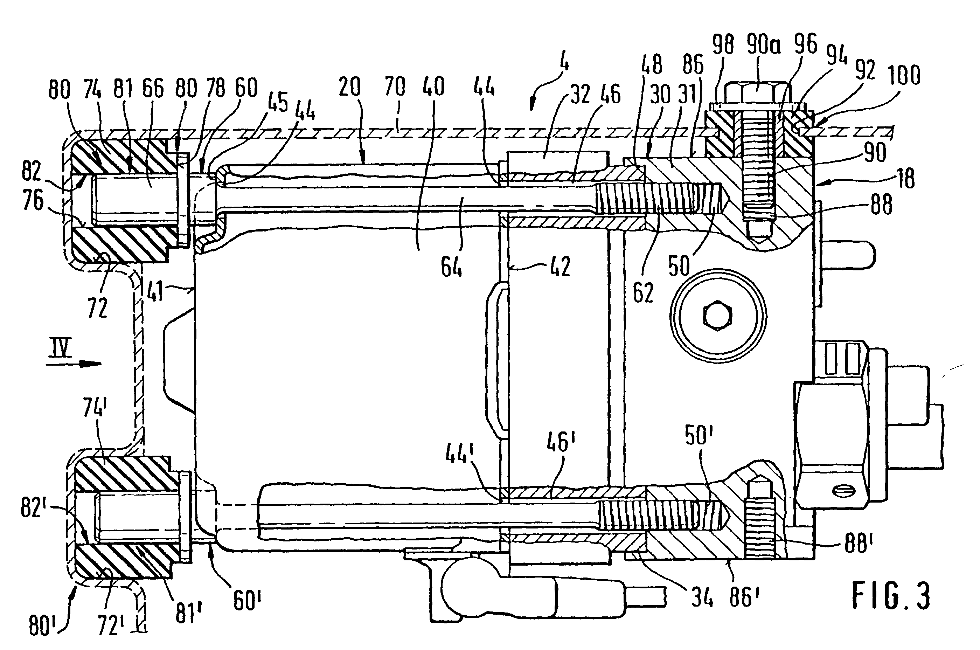

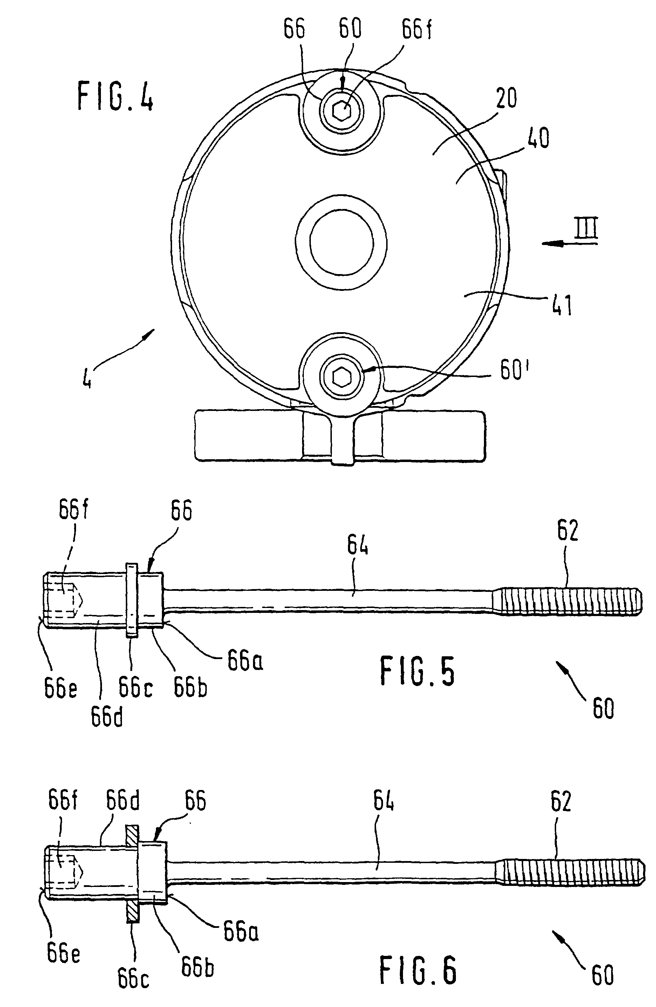

Die **Figur 3** zeigt eine Längsseite des Pumpenaggregats 4, wobei einzelne Bereiche des Pumpenaggregats 4 dem besseren Verständnis wegen geschnitten dargestellt sind. Die Figur 3 zeigt das Pumpenaggregat 4 aus einer in der Figur 4 mit einem Pfeil III markierten Blickrichtung.

Die **Figur 4** zeigt eine stirnseitige Ansicht des Pumpenaggregats 4 aus einer in der Figur 3 mit einem Pfeil IV markierten Blickrichtung.

In der nachfolgenden Beschreibung ist in Klammern mehrfach diejenige Figur (Fig.) angegeben, die die jeweilige Einzelheit besonders deutlich zeigt.

Die Pumpe 18 befindet sich in einem Pumpengehäuse 30. Das Pumpengehäuse 30 besteht im wesentlichen aus einem ersten Pumpengehäuseteil 31 und einem zweiten Pumpengehäuseteil 32 (Fig. 2, 3). Der Elektromotor 20 ist an das Pumpengehäuse 30 angeflanscht.

Die Pumpe 18 ist beispielsweise eine Zahnradpumpe. Die Pumpe 18 hat beispielsweise Zahnräder, die durch den Elektromotor 20 zur Rotation gebracht werden. Die Zahnräder fördern das Druckmedium vom Sauganschluß 22a (Fig. 2) zum Druckanschluß 24a. Zum Einbauen der Zahnräder in das Pumpengehäuse 30 ist das Pumpengehäuse 30 in die beiden Pumpengehäuseteile 31 und 32 geteilt. Nach dem Einbauen der Zahnräder in das Pumpengehäuse 30 werden die beiden Pumpengehäuseteile 31 und 32 zusammengefügt. Damit sich die beiden Pumpengehäuseteile 31 und 32 nicht ungewollt gegeneinander verschieben können, ist eine Führung 34 vorgesehen. Die Führung 34 wird im wesentlichen gebildet von einem am zweiten Pumpengehäuseteil 32 vorgesehenen vorspringenden Absatz und einen rückspringenden Absatz am ersten Pumpengehäuseteil 31, wobei der rückspringende Absatz den vorspringenden Absatz aufnimmt.

Die Zahnräder der Pumpe 18 befinden sich im wesentlichen im Pumpengehäuseteil 31, und das zweite Pumpengehäuseteil 32 dient im wesentlichen zur Abdeckung des Einbauraums für die Zahnräder. Im zweiten Pumpengehäuseteil 32 befindet sich beispielsweise auch noch ein Lager und eine in diesem Lager gelagerte Welle zum Übertragen des Drehmoments vom Elektromotor 20 zu den Zahnrädern der Pumpe 18. Die Zahnräder, die Welle und das erwähnte Lager sind in der Zeichnung der besseren Übersichtlichkeit wegen nicht dargestellt. Es sei noch erwähnt, daß die Pumpe 18 beispielsweise auch eine Kolbenpumpe, vorzugsweise eine Radialkolbenpumpe, sein kann.

Der Elektromotor 20 befindet sich innerhalb eines Motorgehäuses 40. Das Motorgehäuse 40 ist zylinderförmig und hat eine dem Pumpengehäuse 30 abgewandte Stirnseite 41 (Fig. 3) und eine dem Pumpengehäuse 30 zugewandte Stirnseite 42. Durch das Motorgehäuse 40 führt eine Öffnung 44 (Fig. 3) von der Stirnseite 41 zur Stirnseite 42. Auf der Stirnseite 41 des Motorgehäuses 40 ist eine Schraubenauflagefläche 45 vorgesehen. Die Schraubenauflagefläche 45 verläuft ringförmig um die Öffnung 44. Parallel zur Öffnung 44 führt eine zweite Öffnung 44' von der Stirnseite 41 zur Stirnseite 42. Das zweite Pumpengehäuseteil 32 ist ebenfalls annähernd zylinderförmig (Fig. 2) und hat eine dem Elektromotor 20 zugewandte Stirnseite und eine dem ersten Pumpengehäuseteil 31 zugewandte Stirnseite. Eine Durchgangsöffnung 46 führt durch das Pumpengehäuseteil 32 von der einen Stirnseite zu der anderen Stirnseite. Parallel dazu ist in dem zweiten Pumpengehäuseteil 32 eine zweite Durchgangsöffnung 46' vorgesehen, die ebenfalls die beiden Stirnseiten verbindet. Auch das erste Pumpengehäuseteil 31 hat, grob betrachtet, eine im wesentlichen zylinderförmige Gestalt (Fig. 2) mit einer dem zweiten Pumpengehäuseteil 32 zugewandten Stirnseite 48 (Fig. 3). Ausgehend von der Stirnseite 48 führt ein Sackloch in das Pumpengehäuseteil 31. In dieses Sackloch ist ein Muttergewinde 50 geschnitten. Parallel zu dem Muttergewinde 50 ist, ausgehend von der Stirnseite 48, ein zweites Sackloch mit einem zweiten Muttergewinde 50' vorgesehen. Sind die beiden Pumpengehäuseteile 31, 32 und das Motorgehäuse 40 mit dem Elektromotor 20 ordnungsgemäß zusammengefügt, dann befinden sich die Öffnung 44, die Durchgangsöffnung 46 und das Muttergewinde 50 in einer Reihe; dann sind auch die Öffnung 44', die Durchgangsöffnung 46' und das Muttergewinde 50' in einer Reihe (Fig. 3).

Bei dem Pumpenaggregat 4 gibt es eine Motorbefestigungsschraube 60, die den Elektromotor 20 gegen das Pumpengehäuse 30 hält. Die Motorbefestigungsschraube 60 ist zusätzlich in der Figur 5 separat wiedergegeben.

Die Figur 5 zeigt die Motorbefestigungsschraube 60 vor dem Einbau in das Motorgehäuse 40 und in das Pumpengehäuse 30.

Die Motorbefestigungsschraube 60 kann gedanklich in mehrere Bereiche unterteilt werden. Die Motorbefestigungsschraube 60 hat einen Bereich mit einem Schraubengewinde 62 (Fig. 5), einen Bereich mit einem Schaft 64 und einen Bereich, der nachfolgend als Schraubenkopf 66 bezeichnet wird. Der Schaft 64 verbindet das Schraubengewinde 62 mit dem Schraubenkopf 66. Die Motorbefestigungsschraube 60 kann jedoch auch so ausgeführt sein, daß das Schraubengewinde 62 bis an den Schraubenkopf 66 reicht. Am Übergang vom Schaft 64 zum Schraubenkopf 66 gibt es einen Absatz (Fig. 5), so daß am Schraubenkopf 66 eine dem Schraubengewinde 62 zugewandte Spannfläche 66a entsteht. Der Schraubenkopf 66 ist im wesentlichen zylinderförmig. Am Außenmantel des zylinderförmigen Schraubenkopfs 66 gibt es einen umlaufenden, radial vorstehenden scheibenartigen Ring 66c. Der Ring 66c wird durch spanende oder spanlos umformende Bearbeitung an die Motorbefestigungsschraube 60 einstückig angeformt. Der zylinderartige Schraubenkopf 66 hat auf der dem Schraubengewinde 62 abgewandten Ende eine Stirnseite 66e (Fig. 5). Zwischen der Spannfläche 66a und dem scheibenartigen Ring 66c hat der Schraubenkopf 66 einen ersten Kopfbereich 66b. Der Bereich des Schraubenkopfs 66 zwischen dem scheibenartigen Ring 66c und der Stirnseite 66e wird nachfolgend als zweiter Kopfbereich 66d bezeichnet. Ausgehend von der Stirnseite 66e führt eine Vertiefung in den Schraubenkopf 66. Die Vertiefung ist nicht rund. Die Vertiefung hat beispielsweise einen sechseckigen Querschnitt und bildet deshalb eine Drehmitnahme 66f (Fig. 4, 5), an der beispielsweise ein Drehmomentschlüssel zum Drehen und Festschrauben der Motorbefestigungsschraube 60 angreifen kann. Beim in der Figur 5 dargestellten Ausführungsbeispiel ist der Durchmesser des ersten Kopfbereichs 66b gleich wie der zweite Kopfbereich 66d. Es ist möglich, den Durchmesser des ersten Kopfbereichs 66b auch größer oder kleiner als den Durchmesser des zweiten Kopfbereichs 66d auszuführen.

Das Schraubengewinde 62 und der Schaft 64 ragen durch die Öffnung 44 und durch die Durchgangsöffnung 46, und das Schraubengewinde 62 ist in das Muttergewinde 50 eingeschraubt. Die Länge der Motorbefestigungsschraube 60 ist so dimensioniert, daß im eingeschraubten und festgezogenen Zustand die Spannfläche 66a (Fig. 5) der Motorbefestigungsschraube 60 gegen die Schraubenauflagefläche 45 (Fig. 3) drückt und den in dem Motorgehäuse 40 vorgesehenen Elektromotor 20 gegen das Pumpengehäuse 30 spannt. Das dargestellte Ausführungsbeispiel ist so gestaltet, daß die Motorbefestigungsschraube 60 dabei auch das zweite Pumpengehäuseteil 32 zwischen den Elektromotor 20 und das erste Pumpengehäuseteil 31 spannt und fixiert. Die Motorbefestigungsschraube 60 hält den Elektromotor 20, das erste Pumpengehäuseteil 31 und das zweite Pumpengehäuseteil 32 zusammen.

Bei dem Pumpenaggregat 4 gibt es parallel zu der Motorbefestigungsschraube 60 eine zweite Motorbefestigungsschraube 60'. Die Motorbefestigungsschraube 60' ragt durch die Öffnung 44' und durch die Durchgangsöffnung 46' und ist in das Muttergewinde 50' eingeschraubt. Beide Motorbefestigungsschrauben 60 und 60' sind identisch ausgeführt und identisch montiert.

Das Pumpenaggregat 4 wird an einer Karosserie 70 eines Fahrzeugs befestigt. Der besseren Übersichtlichkeit wegen ist die Karosserie 70 in der Zeichnung (Fig. 3) gestrichelt dargestellt, und die Figur 4 zeigt das Pumpenaggregat 4 vor einem Anbau an die Karosserie 70. Das mit dem Bezugszeichen 70 versehene Teil muß nicht die Karosserie des Fahrzeugs selbst sein, sondern bei dem gestrichelt dargestellten Teil mit dem Bezugszeichen 70 kann es sich um ein weitgehend beliebiges, mit der eigentlichen Karosserie des Fahrzeugs verbundenes Teil handeln, wie z. B. ein Träger, ein Motorschemel eines Verbrennungsmotors oder ein an der Karosserie befestigtes Halteblech. Nachfolgend werden der Einfachheit halber diese mit der Karosserie des Fahrzeugs verbundenen Teile jedoch ebenfalls als Karosserie 70 bezeichnet. Über beispielsweise den Träger, den Motorschemel oder das Halteblech ist das Pumpenaggregat 4 zumindest indirekt an der Karosserie des Fahrzeugs mechanisch befestigbar.

In der Karosserie 70 gibt es eine Vertiefung 72. In die Vertiefung 72 ist ein aus einem nachgiebigen Werkstoff bestehendes Formteil 74 eingelegt. Das Formteil 74 besteht beispielsweise aus elastischem Gummi oder einem elastisch nachgiebigen Elastomerwerkstoff. Das Formteil 74 ist größenmäßig so auf die Vertiefung 72 abgestimmt, daß das Formteil 74 ohne herauszufallen in der Vertiefung 72 festhält.

In dem Formteil 74 gibt es eine Öffnung, die eine Aufnahme 76 bildet. Das Formteil 74 hat eine Stirnseite, die als Anlage 78 dient.

Neben der Vertiefung 72 gibt es in der Karosserie 70 eine zweite Vertiefung 72', die im wesentlichen gleich gestaltet ist wie die Vertiefung 72. In der zweiten Vertiefung 72' steckt ein zweites Formteil 74'. Das zweite Formteil 74' ist mit dem Formteil 74 identisch.

Der Kopfbereich 66d (Fig. 5) der Motorbefestigungsschraube 60 kann in die Aufnahme 76 des Formteils 74 gesteckt werden, bis der Ring 66c der Motorbefestigungsschraube 60 an der am Formteil 74 vorgesehenen Anlage 78 anliegt. Dadurch ergibt sich eine mechanische Verbindung 80 zwischen dem Pumpenaggregat 4 und der Karosserie 70. Zu der mechanischen Verbindung 80 gehört ein dem Pumpenaggregat 4 zugeordnetes Verbindungsteil 81 und ein der Karosserie 70 zugeordnetes Gegenverbindungsteil 82. Das Verbindungsteil 81 der mechanischen Verbindung 80 befindet sich am Schraubenkopf 66 der Motorbefestigungsschraube 60. Bei dem bevorzugt ausgewählten Ausführungsbeispiel bildet der Kopfbereich 66d der Motorbefestigungsschraube 60 das Verbindungsteil 81, und die Aufnahme 76 am Formteil 74 bildet das Gegenverbindungsteil 82. Durch einfaches Hineinstecken des Kopfbereichs 66d der Motorbefestigungsschraube 60 in die Aufnahme 76 des Formteils 74 kann das Pumpenaggregat 4 auf einfache Weise schnell mit der Karosserie 70 verbunden werden. Nach Lösen einer weiter hinten beschriebenen Befestigungsschraube 90 (Fig. 3) kann bei Bedarf das Pumpenaggregat 4 durch Auseinanderstecken des Verbindungsteils 81 und des Gegenverbindungsteils 82 einfach und schnell von der Karosserie 70 abmontiert werden.

Zwischen der zweiten Motorbefestigungsschraube 60' und dem zweiten Formteil 74' wird eine zweite mechanische Verbindung 80' gebildet. Die zweite mechanische Verbindung 80' umfaßt ein der Motorbefestigungsschraube 60' zugeordnetes zweites Verbindungsteil 81' und ein der Karosserie 70 zugeordnetes zweites Gegenverbindungsteil 82'.

Mit Hilfe der mechanischen Verbindungen 80, 80' kann das Pumpenaggregat 4 an die Karosserie 70 gesteckt werden. Deshalb kann die mechanische Verbindung 80 bzw. 80' auch als Steckverbindung bezeichnet werden. Entsprechend kann das Verbindungsteil 81 bzw. 81' als Steckverbindungsteil bezeichnet werden, und man kann das Gegenverbindungsteil 82 bzw. 82' auch als Gegensteckverbindungsteil bezeichnen.

Am Außenumfang des Pumpengehäuseteils 31 der Pumpe 18 sind eine Abflachung 86 (Fig. 2) und eine diametral gegenüberliegende zweite Abflachung 86' vorgesehen. Ausgehend von der Abflachung 86 führt ein Muttergewinde 88 in das Pumpengehäuseteil 31 des Pumpengehäuses 30 der Pumpe 18 (Fig. 3). Ausgehend von der Abflachung 86' führt ein zweites Muttergewinde 88' in das Pumpengehäuseteil 31. In das Muttergewinde 88 und in das zweite Muttergewinde 88' kann eine handelsübliche, kostengünstige Befestigungsschraube 90 (Fig. 3) eingeschraubt werden.

In der Karosserie 70 ist ein Loch 92 vorgesehen. In das Loch 92 ist ein Formteil 94 eingeknöpft. Das Formteil 94 hat eine umlaufende Nut, so daß nach dem Einknöpfen des Formteils 94 in das Loch 92 das Formteil 94 an der Karosserie 70 festgehalten wird. Das Formteil 94 besteht aus einem nachgiebigen Werkstoff, beispielsweise aus elastischem Gummi oder einem elastisch nachgiebigen Elastomerwerkstoff.

Axial durch das Formteil 94 erstreckt sich eine Bohrung, in die eine metallische Hülse 96 eingesteckt oder einvulkanisiert oder eingeklebt ist.

Die Befestigungsschraube 90 hat einen Schraubenkopf 90a mit einer Schlüsselfläche. Zwischen dem Schraubenkopf 90a und dem Formteil 94 bzw. der Hülse 96 ist eine Scheibe 98 vorgesehen. Im montierten Zustand ist das Formteil 94 zwischen der Abflachung 86 am Pumpengehäuse 30 und der Scheibe 98 eingespannt. Dadurch entsteht zwischen der Karosserie 70 und dem Pumpenaggregat 4 eine dritte Verbindung 100. Die Hülse 96 im Formteil 94 sorgt dafür, daß beim Anziehen bzw. Festziehen der Befestigungsschraube 90 das Formteil 94 nicht zu sehr gequetscht wird. Die Hülse 96 bewahrt somit das Formteil 94 vor Überbeanspruchung. Wegen der Hülse 96 kann die Befestigungsschraube 90 ordnungsgemäß angezogen werden, ohne daß eine Überbeanspruchung des Formteils 94 befürchtet werden muß. Die Befestigungsschraube 90 kann so gut angezogen werden, daß ein ungewolltes Lösen der Befestigungsschraube 90 auch bei Schüttelbeanspruchung nicht zu befürchten ist.

Mit Hilfe der drei mechanischen Verbindungen 80, 80' und 100 entsteht eine einfach herstellbare, statisch bestimmte Drei-Punkt-Lagerung des Pumpenaggregats 4 an der Karosserie 70. Weil die über die Motorbefestigungsschrauben 60 und 60' gebildeten beiden mechanischen Verbindungen 80 und 80' von der im Bereich des ersten Pumpengehäuseteils 31 vorgesehenen dritten Verbindung 100 möglichst weit entfernt sind, ergibt sich eine besonders gute, stabile Festlegung des Pumpenaggregats 4 an der Karosserie 70, und bei Schwingbeanspruchung ergibt sich auch eine relativ geringe Belastung der Formteile 74, 74' und 94.

Wegen der ziemlich großen Einspannlänge zwischen der Spannfläche 66a (Fig. 5) der Motorbefestigungsschraube 60 und dem Muttergewinde 50 im Pumpengehäuse 30 ist auch bei größerer Schüttelbeanspruchung ein Lösen der Motorbefestigungsschraube 60 nicht zu befürchten. Die Motorbefestigungsschraube 60 ist in etwa wie eine sogenannte Dehnschraube gestaltet, die bekanntlich eine hohe Sicherheit gegen Lösen bietet. Weil die Motorbefestigungsschraube 60 fest angeschraubt ist und sich nicht ungewollt löst, ergibt sich eine gute, auch bei Schwingbeanspruchung dauerhaltbare Verbindung zwischen dem Pumpenaggregat 4 und der Karosserie 70 über die beiden Verbindungen 80 und 80'.

Die Stirnseite 41 des Motorgehäuses 40 ist im Bereich der Schraubenauflagefläche 45 etwas abgesenkt. Dadurch ergibt sich eine Versteifung des Motorgehäuses 40, was das Halten der Motorbefestigungsschraube 60 verbessert, ohne daß ein Verformen des Motorgehäuses 40 befürchtet werden muß.

Die **Figur 6** zeigt beispielhaft eine bevorzugt ausgewählte Abwandlung der Motorbefestigungsschraube 60.

Bei der in der Figur 6 beispielhaft dargestellten Motorbefestigungsschraube 60 hat der erste Kopfbereich 66b einen etwas größeren Durchmesser als der zweite Kopfbereich 66d. Der scheibenartige Ring 66c ist an die Motorbefestigungsschraube 60 nicht einstückig angeformt sondern als separates ringförmiges Bauteil auf den Kopfbereich 66d aufgesteckt bzw. aufgepreßt, bis der Ring 66c am Kopfbereich 66b stirnseitig zur Anlage kommt. Im montierten Zustand ist die Funktionsweise der in der Figur 6 dargestellten Motorbefestigungsschraube 60 gleich wie die Funktionsweise der in der Figur 5 dargestellten Motorbefestigungsschraube 60. Je nach Herstellungsweise der Motorbefestigungsschraube 60 kann es weniger Aufwand bedeuten, den Ring 66c, wie bei der in der Figur 5 dargestellten Motorbefestigungsschraube 60, einstückig an den Schraubenkopf 66 anzuformen oder, wie in der Figur 6 gezeigt, den Ring 66c aufzustecken, weil dann das Grundmaterial für die Motorbefestigungsschraube 60 einen kleineren Außendurchmesser haben kann.

Damit das Pumpenaggregat 4 ordnungsgemäß arbeiten kann, muß eine bestimmte Einbaulage des Pumpenaggregats 4 beachtet werden. Beispielsweise ist ein beliebiges Verdrehen des Pumpenaggregats 4 um seine Längsachse nicht möglich. Weil jedoch je nach Fahrzeug, in das das Pumpenaggregat 4 eingebaut werden soll, die Zugänglichkeit zum Montieren der Befestigungsschraube 90 an unterschiedlichen Stellen unterschiedlich gut ist, sind bei dem bevorzugt ausgewählten Ausführungsbeispiel die beiden Muttergewinde 88 und 88' vorgesehen, wobei es völlig ausreicht, nur in eine der beiden Muttergewinde 88 bzw. 88' die Befestigungsschraube 90 einzusetzen. Durch Vorsehen der beiden Muttergewinde 88 und 88' kann ohne Aufwand das jeweils besser geeignete Muttergewinde 88 bzw. 88' zum Einschrauben der Befestigungsschraube 90 ausgewählt werden. Es kann auch noch ein drittes oder weitere Muttergewinde vorgesehen sein, wobei die Befestigungsschraube 90 wahlweise in eines der Muttergewinde eingeschraubt wird.

Die elastischen Formteile 74, 74' und 94 sorgen für eine schwingungsmäßige Abkopplung des Pumpenaggregats 4 von der Karosserie 70. Die Formteile 74, 74', 94 dienen deshalb der Geräuschreduzierung.

## Patentansprüche

1. Pumpenaggregat für ein Fahrzeugbremssystem mit einem Pumpengehäuse (30, 31, 32) und mit einem an das Pumpengehäuse angeflanschten, mit mindestens einer Motorbefestigungsschraube (60, 60') gegen das Pumpengehäuse gehaltenen Elektromotor (20, 40), wobei die Motorbefestigungsschraube ein in das Pumpengehäuse eingeschraubtes Schraubengewinde und einen sich am Elektromotor abstützenden Schraubenkopf hat, und das Pumpenaggregat über mindestens eine Verbindung mindestens indirekt an einer Karosserie eines Fahrzeugs mechanisch festlegbar ist, **dadurch gekennzeichnet, daß** der Schraubenkopf (66) der Motorbefestigungsschraube (60, 60') ein Verbindungsteil (81, 81') der Verbindung (80) bildet, wobei das Verbindungsteil (81, 81') vorgesehen ist, um an einem der Karosserie (70) zugeordneten Gegenverbindungsteil (82, 82') der Verbindung (80) anzugreifen.

2. Pumpenaggregat nach Anspruch 1, **dadurch gekennzeichnet, daß** an dem Schraubenkopf (66) eine innenliegende, stirnseitig zugängliche Drehmitnahme (66f) vorgesehen ist.

3. _Pumpenaggregat nach Anspruch 1 oder 2, **dadurch gekennzeichnet, daß** an dem Schraubenkopf (66) ein radial vorstehender Absatz (66c) vorgesehen ist, an dem das Gegenverbindungsteil (82, 82') zur Anlage kommen kann.

4. Pumpenaggregat nach Anspruch 3, **dadurch gekennzeichnet, daß** der Absatz (66c) umlaufend an der Motorbefestigungsschraube (60, 60') vorgesehen ist.

5. Pumpenaggregat nach einem der vorhergehenden Ansprüche, **dadurch gekennzeichnet, daß** eine zweite Motorbefestigungsschraube (60') vorgesehen ist.

6. Pumpenaggregat nach einem der vorhergehenden Ansprüche, **dadurch gekennzeichnet, daß** an dem Pumpengehäuse (30, 31, 32) mindestens ein Gewinde (88, 88') zum Anschrauben einer zum mindestens indirekten Befestigen an der Karosserie (70) dienenden Befestigungsschraube (90) vorgesehen ist.

7. Pumpenaggregat nach Anspruch 6, **dadurch gekennzeichnet, daß** das Gewinde (88, 88') ein Muttergewinde (88, 88') ist.

8. Pumpenaggregat nach Anspruch 6 oder 7, **dadurch gekennzeichnet, daß** zwei Gewinde (88, 88') vorgesehen sind.

9. Verbindung einer Karosserie eines Fahrzeugs mit einem Pumpenaggregat für ein Fahrzeugbremssystem, wobei das Pumpenaggregat ein Pumpengehäuse (30, 31, 32) und einen an das Pumpengehäuse angeflanschten, mit mindestens einer Motorbefestigungsschraube (60, 60') gegen das Pumpengehäuse gehaltenen Elektromotor (20, 40) hat, die Motorbefestigungsschraube ein in das Pumpengehäuse eingeschraubtes Schraubengewinde und einen sich am Elektromotor abstützenden Schraubenkopf hat, und das Pumpenaggregat mindestens indirekt an der Karosserie mechanisch festgelegt ist, **dadurch gekennzeichnet, daß** der Schraubenkopf (66) der Motorbefestigungsschraube (60, 60') ein Verbindungsteil (81, 81') der Verbindung (80) bildet und das Verbindungsteil (81, 81') an einem der Karosserie (70) zugeordneten Gegenverbindungsteil (82, 82') angreift.

10. Verbindung nach Anspruch 9, **dadurch gekennzeichnet, daß** der Karosserie (70) ein aus einem nachgiebigen Werkstoff bestehendes Formteil (74, 74') zugeordnet ist, an dem das Gegenverbindungsteil (82) vorgesehen ist.

11. Verbindung nach Anspruch 10, **dadurch gekennzeichnet, daß** das Formteil (74, 74') in eine der Karosserie (70) zugeordnete Vertiefung (72, 72') eingelegt ist.

12. Verbindung nach einem der Ansprüche 9, 10 oder 11, **dadurch gekennzeichnet, daß** der Schraubenkopf (66) eine zylinderförmige Außenfläche (66d) hat und das Gegenverbindungsteil (82, 82') eine zylinderförmige Innenfläche (76) hat, wobei die zylinderförmige Außenfläche (66d) in die zylinderförmige Innenfläche (76) eingreift.

13. Verbindung nach einem der Ansprüche 9 bis 12, **dadurch gekennzeichnet, daß** an dem Pumpengehäuse (30, 31, 32) mindestens ein Gewinde (88, 88') zum Anschrauben einer zum mindestens indirekten Befestigen an der Karosserie (70) dienenden Befestigungsschraube (90) vorgesehen ist und zwischen der Befestigungsschraube (90) und der Karosserie (70) ein aus einem nachgiebigen Werkstoff bestehendes Formteil (94) vorgesehen ist, an dem die Befestigungsschraube (90) mindestens indirekt angreift.

14. Verbindung nach einem der Ansprüche 9 bis 13 , **dadurch gekennzeichnet, daß** die Verbindung (80, 81, 82) eine Steckverbindung ist.

## Claims

1. Pump assembly for a vehicle brake system, with a pump casing (30, 31, 32) and with an electric motor (20, 40) flanged to the pump casing and held against the latter by means of at least one motor fastening screw (60, 60'), the motor fastening screw having a screw thread screwed into the pump casing and a screw head supported on the electric motor, and the pump assembly being capable of being secured mechanically, at least indirectly, to a body of a vehicle by means of at least one connection, **characterized in that** the screw head (66) of the motor fastening screw (60, 60') forms a connecting part (81, 81') of the connection (80), the connecting part (81, 81') being provided for engaging on a counterconnecting part (82, 82') of the connection (80), said counterconnecting part being assigned to the body (70).

2. Pump assembly according to Claim 1, **characterized in that** an inner rotary take-up (66f) accessible on the end face is provided on the screw head (66).

3. Pump assembly according to Claim 1 or 2, **characterized in that** the screw head (66) has provided on it a radially projecting step (66c), on which the counterconnecting part (82, 82') can come to bear.

4. Pump assembly according to Claim 3, **characterized in that** the step (66c) is provided peripherally on the motor fastening screw (60, 60').

5. Pump assembly according to one of the preceding claims, **characterized in that** a second motor fastening screw (60') is provided.

6. Pump assembly according to one of the preceding claims, **characterized in that** the pump casing (30, 31, 32) has provided on it at least one thread (88, 88') for screwing on a fastening screw (90) serving for at least indirect fastening to the body (70).

7. Pump assembly according to Claim 6, **characterized in that** the thread (88, 88') is a female thread (88, 88').

8. Pump assembly according to Claim 6 or 7, **characterized in that** two threads (88, 88') are provided.

9. Connection of a body of a vehicle to a pump assembly for a vehicle brake system, the pump assembly having a pump casing (30, 31, 32) and an electric motor (20, 40) flanged to the pump casing and held against the latter by means of at least one motor fastening screw (60, 60'), the motor fastening screw having a screw thread screwed into the pump casing and a screw head supported on the electric motor, and the pump assembly being secured mechanically, at least indirectly, to the body, **characterized in that** the screw head (66) of the motor fastening screw (60, 60') forms a connecting part (81, 81') of the connection (80), and the connecting part (81, 81') engages on a counterconnecting part (82, 82') assigned to the body (70).

10. Connection according to Claim 9, **characterized in that** the body (70) is assigned a moulding (74, 74') which consists of a resilient material and on which the counterconnecting part (82) is provided.

11. Connection according to Claim 10, **characterized in that** the moulding (74, 74') is inserted into a depression (72, 72') assigned to the body (70).

12. Connection according to one of Claims 9, 10 or 11, **characterized in that** the screw head (66) has a cylindrical outer face (66d) and the counterconnecting part (82, 82') has a cylindrical inner face (76), the cylindrical outer face (66d) engaging into the cylindrical inner face (76).

13. Connection according to one of Claims 9 to 12, **characterized in that** the pump casing (30, 31, 32) has provided on it at least one thread (88, 88') for screwing on a fastening screw (90) serving for at least indirect fastening to the body (70), and between the fastening screw (90) and the body (70) is provided a moulding (94) which consists of a resilient material and on which the fastening screw (90) engages at least indirectly.

14. Connection according to one of Claims 9 to 13, **characterized in that** the connection (80, 81, 82) is a plug connection.

## Revendications

1. Unité de pompe pour un système de frein de véhicule, comprenant un corps de pompe (30, 31, 32) et un moteur électrique (20, 40) maintenu par bride contre le corps de pompe, à l'aide d'au moins une vis de fixation de moteur (60, 60'),
la vis de fixation de moteur ayant un filetage qui se visse dans le corps de pompe et une tête de vis qui s'appuie sur le moteur électrique, et l'unité de pompe étant fixée au moins indirectement à la carrosserie d'un véhicule, mécaniquement par au moins une liaison,
**caractérisée en ce que**
la tête de vis (66) de la vis de fixation de moteur (60, 60') forme une pièce de liaison (81, 81') de la liaison (80), la pièce de liaison (81, 81') étant prévue pour agir sur une pièce de liaison opposée (82, 82') de la liaison (80) associée à la carrosserie (70).

2. Unité de pompe selon la revendication 1,
**caractérisée par**
une prise de rotation (66f), accessible par la face frontale, situé à l'intérieur de la tête de vis (66).

3. Unité de pompe selon l'une quelconque des revendications 1 ou 2,
**caractérisée par**
un prolongement (66c) en saillie radialement sur la tête de vis (66) contre lequel vient en appui la pièce de liaison opposée (82, 82').

4. Unité de pompe selon la revendication 3,
**caractérisée en ce que**
le prolongement (66c) est périphérique sur la vis de fixation de moteur (60, 60').

5. Unité de pompe selon l'une quelconque des revendications précédentes,
**caractérisée par**
une seconde vis de fixation de moteur (60').

6. Unité de pompe selon l'une quelconque des revendications précédentes,
**caractérisée en ce que**
le corps de pompe (30, 31, 32) comporte au moins un filetage (88, 88') pour visser une vis de fixation (90) servant au moins à la fixation indirecte sur la carrosserie (70).

7. Unité de pompe selon la revendication 6,
**caractérisée en ce que**
le filetage (88, 88') est un filetage intérieur (88, 88').

8. Unité de pompe selon l'une quelconque des revendications 6 ou 7,
**caractérisée en ce qu'**
elle comporte deux filetages (88, 88').

9. Combinaison d'une carrosserie de véhicule et d'une unité de pompe d'un système de frein de véhicule, l'unité de pompe comprenant un corps (30, 31, 32) et un moteur électrique (20, 40) tenu sur le corps de pompe par au moins une vis de fixation de moteur (60, 60') en étant relié au corps de pompe par une bride,
la vis de fixation de moteur ayant un filetage vissé dans le corps de pompe et une tête de vis pour recevoir un moteur électrique, et l'unité de pompe étant fixée au moins indirectement mécaniquement à la carrosserie,
**caractérisée en ce que**
la tête de vis (66) de la vis de fixation de moteur (60, 60') forme une partie de liaison (81, 81') de la liaison (80) et la pièce de liaison (81, 81') agit sur une pièce de liaison opposée (82, 82') associée à la carrosserie (70).

10. Combinaison selon la revendication 9,
**caractérisée en ce que**
la carrosserie (70) comporte une pièce moulée (74, 74') réalisée en une matière souple et sur laquelle est prévue la pièce de liaison opposée (82).

11. Combinaison selon la revendication 10,
**caractérisée en ce que**
la pièce moulée (74, 74') est placée dans une cavité (72, 72') réalisée dans la carrosserie (70).

12. Combinaison selon l'une quelconque des revendications 9, 10, 11,
**caractérisée en ce que**
la tête de vis (66) présente une surface extérieure (66d) cylindrique et la pièce de liaison opposée (82, 82') a une surface intérieure (76) de forme cylindrique, la surface extérieure (66d) de forme cylindrique venant prendre dans la surface intérieure (76) de forme cylindrique.

13. Combinaison selon l'une quelconque des revendications 9 à 12,
**caractérisée en ce que**
le corps de pompe (30, 31, 32) comporte au moins un filetage (88, 88') pour visser une vis de fixation (90) servant au moins à la fixation indirecte sur la carrosserie (70) et entre la vis de fixation (90) et la carrosserie (70) il est prévu une pièce moulée (94) en matière souple sur laquelle la vis de fixation (90) agit au moins indirectement.

14. Combinaison selon l'une quelconque des revendications 9 à 13,
**caractérisée en ce que**
la liaison (80, 81, 82) est une liaison par enfichage.
